(19)

Europäisches
Patentamt
European
Patent Office
Office européen
des brevets

(11) **EP 3 425 863 A1**

(12) **EUROPEAN PATENT APPLICATION**

(43) Date of publication:
**09.01.2019 Bulletin 2019/02**

(51) Int Cl.:
***H04L 27/26*** *(2006.01)*

(21) Application number: **17179603.0**

(22) Date of filing: **04.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Fraunhofer-Gesellschaft zur Förderung der angewandten Forschung e.V.
80686 München (DE)**

(72) Inventor: **DATTA, Rohit
91058 Erlangen (DE)**

(74) Representative: **Zinkler, Franz
Schoppe, Zimmermann, Stöckeler
Zinkler, Schenk & Partner mbB
Patentanwälte
Radlkoferstrasse 2
81373 München (DE)**

(54) **COMMUNICATION SIGNAL CLASSIFIER AND METHOD FOR CLASSIFICATION OF A COMMUNICATION SIGNAL**

(57)    A communication signal classifier configured to determine a cyclic autocorrelation function based on a received signal and to determine a frequency division multiplexing (FDM) transmission scheme of a transmitter based on the determined cyclic autocorrelation function. Moreover, the communication signal classifier is configured to classify at least three types of FDM transmission schemes based on the cyclic autocorrelation function.

100

Fig. 1

**Description**

Embodiments of the present invention generally relate to classifying transmission schemes used in communication signals based on received signals.

Background of the Invention

The next generation 5G radio access will include various orthogonal and non-orthogonal waveform transmission schemes. Each of these waveforms will be unique and different with their own subtle characteristics based on various parameters. Depending on the use-case scenario, various 5G waveforms will be transmitted and at the receiver, they may need to be identified properly among a family of 5G New Radio (NR) waveforms.

Therefore, a desire exists for an improved concept which enables a better classification of frequency division multiplex transmission schemes.

Summary of the Invention

Embodiments according to the invention provide for a communication signal classifier. The communication signal classifier is configured to determine a cyclic autocorrelation function based on a received signal and the communication signal classifier is configured to determine a frequency division multiplexing (FDM) transmission scheme of a transmitter based on the determined cyclic autocorrelation function. Moreover, the communication signal classifier is configured to classify at least three types of FDM transmission schemes based on the cyclic autocorrelation function.

The described embodiment is based on the idea that it is useful to be able, e.g. for a receiver comprising the communication signal classifier, to know or determine what kind of transmission scheme is used by a transmitter. More specifically, the received signal is based on a transmitted signal of a transmitter which may use an FDM based transmission scheme, like orthogonal frequency division multiplex (OFDM), generalized frequency division multiplex (GFDM) or filter bank multicarrier (FBMC), to name a few. As a receiver may not know which transmission scheme was employed by a transmitter it can easily determine the used transmission scheme using the described classifier.

In embodiments, the classifier may be configured to determine if an orthogonal frequency division multiplex (OFDM) transmission scheme and/or a generalized frequency division multiplex (GFDM) transmission scheme and/or a filter bank multicarrier (FBMC) transmission scheme is underlying the received signal based on the determined cyclic autocorrelation function of the received signal. OFDM is a common scheme and is therefore advantageous to be able to detect because of its widespread use. However, being able to additionally detect GFDM or FBMC transmission schemes allows the classifier to be used for future radio transmission techniques, e.g. in 5G new radio.

In embodiments, the classifier may be configured to obtain the cyclic autocorrelation function based on a time delay and frequency analysis of the received signal, such that the determined cyclic autocorrelation is a two-dimensional function of time delay ($d$) and frequency ($\beta$). The described embodiment allows for an analysis of time delay correlation and similarity to frequencies. Based on the analysis the embodiment can easily determine between various transmission schemes.

In embodiments, the classifier may be configured to determine the cyclic autocorrelation function using an autocorrelation of the received signal, in order to obtain a time delay dependency of the correlation of the received signal. Further the classifier may be configured to use a transformation into a frequency domain, in order to obtain a frequency dependency of the correlation of the received signal for the individual time delays of the autocorrelation. The described embodiment is especially suitable to easily determine correlations in time or similarities in frequency of the received signal. Based on the analysis the embodiment can easily determine between various transmission schemes.

In embodiments, the classifier is configured to obtain the cyclic autocorrelation function according to

$$R_{ss}^{\beta}(d) = \frac{1}{N_s} \sum_{n=0}^{N_s-1} s^*(n)s(n+d)\exp(-j2\pi\beta n\Delta t),$$

wherein s(n) is the received signal, $N_s$ is a number of samples used for the computation, $d$ is a time delay for which the cyclic autocorrelation function is computed, $\beta$ is a frequency for which the cyclic autocorrelation function is evaluated and * denotes complex conjugation. The described calculation rule allows for easy determination of the cyclic autocorrelation function.

In embodiments, the classifier may be configured to detect an orthogonal frequency division multiplex transmission scheme based on a presence of peaks along a time delay ($d$) axis of the cyclic autocorrelation function, at non-zero time delay ($d$) and zero frequency ($\beta$), and the absence of peaks along a frequency axis ($\beta$) of the cyclic autocorrelation function, at non-zero frequency ($\beta$) and zero time delay ($d$). The described embodiment allows for easy detection of OFDM based in the cyclic autocorrelation function.

In embodiments, the classifier may be configured to detect a generalized frequency division multiplex transmission scheme based on a presence of peaks along a time delay axis ($d$) of the cyclic autocorrelation function, at non-zero time delay ($d \neq 0$) and zero frequency ($\beta \approx 0$), and the presence of peaks along a frequency axis ($\beta$) of the cyclic autocorrelation function, at non-zero frequency ($\beta \neq 0$) and zero time delay ($d \approx 0$). The described embodiment allows for easy detection of GFDM based in the cyclic autocorrelation function.

In embodiments, the classifier may be configured to detect a filter bank multicarrier transmission scheme based on an absence of peaks along a time delay axis ($d$) of the cyclic autocorrelation function, at non-zero time delay ($d \neq 0$) and zero frequency ($\beta \approx 0$), and the presence of peaks along a frequency axis ($\beta$) of the cyclic autocorrelation function, at non-zero frequency ($\beta \neq 0$) and zero time delay ($d \approx 0$). The described embodiment allows for easy detection of FBMC based in the cyclic autocorrelation function.

In embodiments, the classifier may be configured to estimate a pulse shaping filter used for the transmission of the received signal, based on a shape of a peak of the cyclic autocorrelation function at non-zero frequency ($\beta \neq 0$) around time delay ($d \approx 0$) zero. The described embodiment may be able to provide information about a pulse shaping filter used at a transmitter. Moreover, based on the information a receiver may configure a receiving pulse shaping filter accordingly, to allow for reception and/or decoding of the received signal.

In embodiments the classifier may be configured to determine a roll-off factor of a pulse shaping filter based on a level of a peak at non-zero frequency ($\beta \neq 0$) around time delay ($d \approx 0$) zero, wherein the classifier is configured to estimate a high roll-off factor, when the level of the peak is high. Further, the classifier may be configured to estimate a low roll-off factor, when the level of the peak is low. The described embodiment may be able to provide information about a pulse shaping filter used at a transmitter. Moreover, based on the information a receiver may configure a receiving pulse shaping filter accordingly, to allow for reception and/or decoding of the received signal.

In embodiments, the classifier may be configured to obtain a number of time samples used in a generalized frequency division multiplex transmission scheme to form a symbol, e.g. at a transmitter, based on a location of a peak of the cyclic autocorrelation function along the frequency axis ($\beta$) of the cyclic autocorrelation function, at non-zero frequency ($\beta \neq 0$) and zero time delay ($d \approx 0$). The described embodiment may be able to provide information about a pulse shaping filter used at a transmitter. Moreover, based on the information a receiver may configure a receiving pulse shaping filter accordingly, to allow for reception and/or decoding of the received signal.

In embodiments, the classifier may be configured to estimate a payload to cyclic prefix ratio of a transmit symbol, based on a level of a peak along a time delay axis of the cyclic autocorrelation function. The described embodiment may be useful to determine an efficiency, e.g. spectral efficiency, of a received transmission.

In embodiments, the classifier may be configured to classify the received signal based on the cyclic autocorrelation function using a generalized likelihood ratio test (GLRT). Using GLRT allows for easy determination/classification of received signals.

Embodiments according to the invention provide for a method for classifying a communication signal. The method comprises determining a cyclic autocorrelation function based on a received signal and determining a frequency division multiplexing (FDM) transmission scheme of a transmitter based on the determined cyclic autocorrelation function. Further, the method is usable to classify at least three types of FDM transmission schemes based on the cyclic autocorrelation function.

The described methods can be supplemented by any of the features or functionalities described herein with respect to apparatuses, either individually or in combination.

A further preferred embodiment of the invention is a computer program with a program code for performing one of the aforementioned methods when the computer program runs on a computer or a microcontroller.

Brief Description of the Figures

In the following, embodiments of the present invention will be explained with reference to the accompanying drawings, in which:

Fig. 1      shows a schematic block diagram of an apparatus according to embodiments of the invention;

Fig. 2      show a cyclic autocorrelation function obtained from a received signal which is based on a GFDM transmission;

Fig. 3      show a cyclic autocorrelation function obtained from a received signal which is based on a GFDM transmission;

Fig. 4      show a cyclic autocorrelation function obtained from a received signal which is based on a GFDM transmission;

Fig. 5      show a cyclic autocorrelation function 200 obtained from a received signal which is based on a GFDM transmission;

Fig. 6      show a cyclic autocorrelation function obtained from a received signal which is based on a GFDM transmission;

Fig. 7      show a cyclic autocorrelation function obtained from a received signal which is based on a GFDM transmission;

Fig. 8      show a cyclic autocorrelation function obtained from a received signal which is based on a FBMC transmission;

Fig. 9      show a cyclic autocorrelation function obtained from a received signal which is based on a FBMC transmission;

Fig. 10      shows a flow chart of a method according to embodiments of the invention.

Detailed Description of the Embodiments

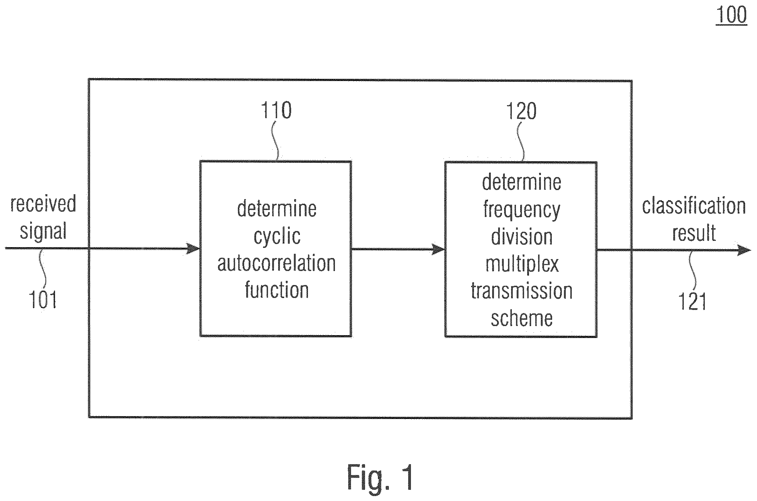

Fig. 1 shows a schematic block diagram of an apparatus 100 according to embodiments of the invention. The apparatus 100, also called classifier, signal classifier or communication signal classifier, is configured to determine a cyclic autocorrelation function (CAF) based on a received signal 101, e.g. using CAF determiner 110. Further the signal classifier 100 is configured to determine a frequency division multiplexing (FDM) transmission scheme of a transmitter based on the determined cyclic autocorrelation function, e.g. using FDM determiner 120. Moreover, the communication signal classifier 100 is configured to classify at least three types of FDM transmission schemes based on the cyclic autocorrelation function. The classification may be provided as the classification result 121.

In the following, more detail is provided on how the classification can be performed by apparatus 100. Moreover, features and functionalities described in the following can be included into apparatus 100, either individually or in combination.

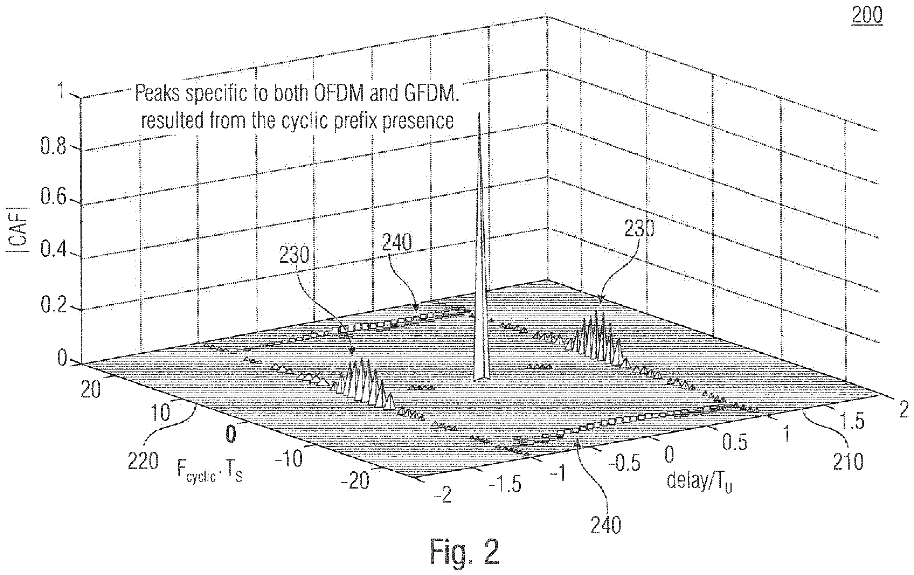

Therefore, Fig. 2 show a cyclic autocorrelation function 200 obtained from a received signal which is based on a GFDM transmission. The CAF 200 has a time delay ($d$) (lag) axis 210 and a frequency ($\beta$) axis 220. The used GFDM transmission used a roll-off factor of 0.1 for the pulse shaping filter and a cyclic prefix (CP) ratio of 1/4. The CAF 200 is symmetric with respect to an axis through time delay 0 and an axis through frequency 0, wherein the symmetry axis are perpendicular to each other. Further, the CAF 200 has peaks 230 at time delay -1 and 1 (due to symmetry) which are caused by repetition of the signal in the cyclic prefix. Therefore, transmission schemes using a cyclic prefix, e.g. OFDM and GFDM, can be identified using the peaks 230 (also called normal peaks). Moreover, GFDM can be distinguished from OFDM by identifying the peaks 240 (also called side peaks), which are arranged along the time axis at frequency -20 and 20 (due to symmetry).

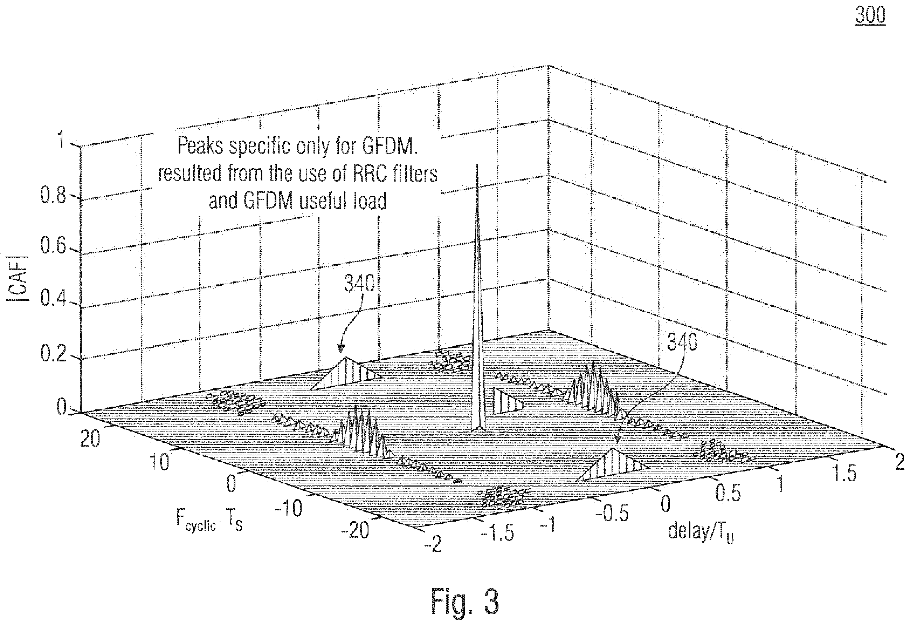

Fig. 3 shows a cyclic autocorrelation function 300 obtained from a received signal which is based on a GFDM transmission. The CAF 300 is similar to the CAF 200 due to the same transmission scheme (GFDM) underlying the received signal. However, CAF 300 shows more pronounced peaks 340 compared to peaks 240. Therefore, the classifier 100 can use the peaks to detect a higher roll-off factor being used. In fact, the roll-off factor underlying CAF 300 is 0.3, which is three times higher than the roll-off factor 0.1 of in CAF 200.

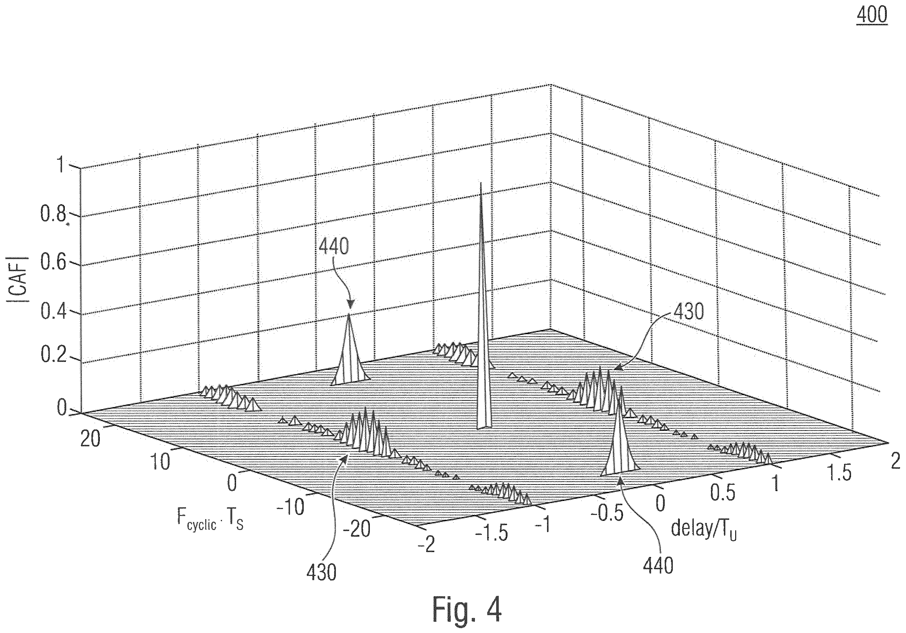

Fig. 4 shows a cyclic autocorrelation function 400 obtained from a received signal which is based on a GFDM transmission. The CAF 400 is again similar to CAFs 200 and 300. However, an increased roll-off factor of 0.9 compared to CAFs 200 and 300 is underlying the received signal. Therefore, peaks 440 are comparably higher than peaks 240 and 340. Thereby, the classifier could identify an increased roll-off factor using detection of the peaks 240, 340 and/or 440.

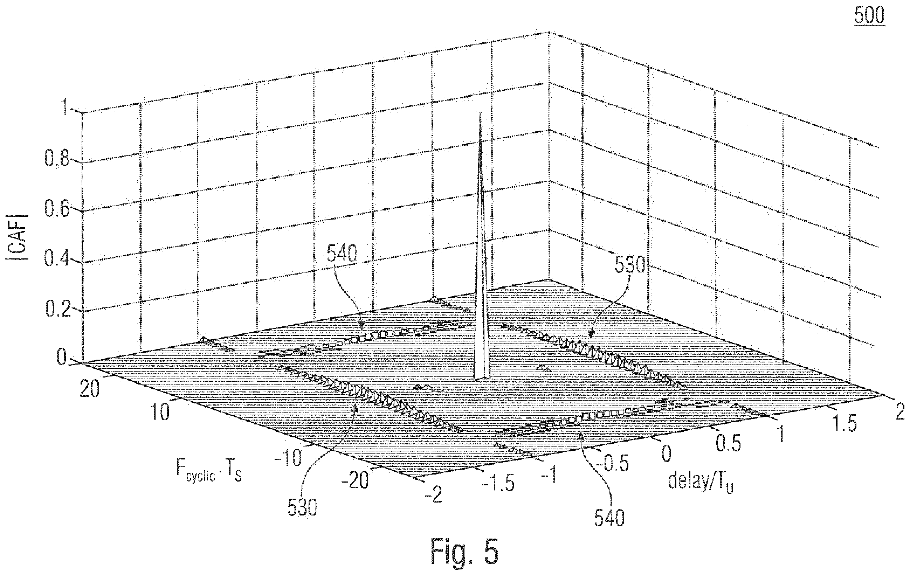

Fig. 5 shows a cyclic autocorrelation function 500 obtained from a received signal which is based on a GFDM transmission. The CAF 500 is similar to the CAFs 200, 300 and 400 as the same transmission scheme is underlying all of them. However, in CAF 500 the peaks 530 are smaller than the peaks 230, 330 and 430 due to a lower CP ratio underlying the transmission of 1/16. Thereby, the classifier 100 may use the CAF 500 to determine a lower CP ratio (payload to cyclic prefix ratio) compared to the transmissions underlying CAFs 200, 300 or 400. Moreover, a small roll-off factor of 0.1 can be detected by the apparatus 100 as the peaks 540 are small.

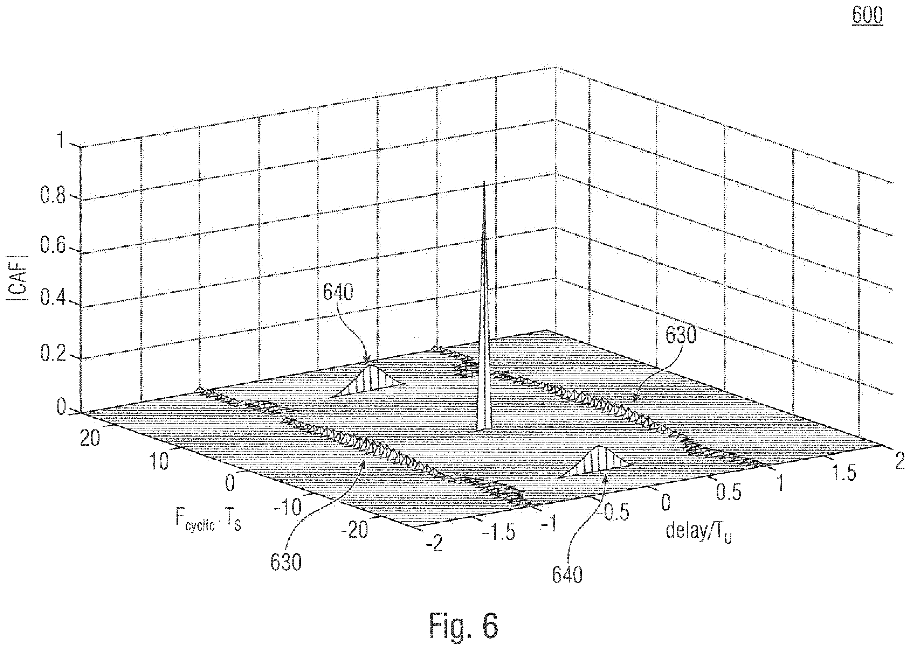

Fig. 6 shows a cyclic autocorrelation function 600 obtained from a received signal which is based on a GFDM transmission. The CAF 600 is similar to the CAFs 200, 300, 400 and 500 as the same transmission scheme is underlying all of them. The peaks 630 are similar to the peaks 530, as the same roll-off factor of 0.1 is underlying the GFDM transmission. Moreover, the peaks 640 are higher compared to the peaks 540 as a higher roll-off factor of 0.3 is underlying the transmission. The peaks 640 are further similar to the peaks 330 as the same roll-off factor is underlying the transmission.

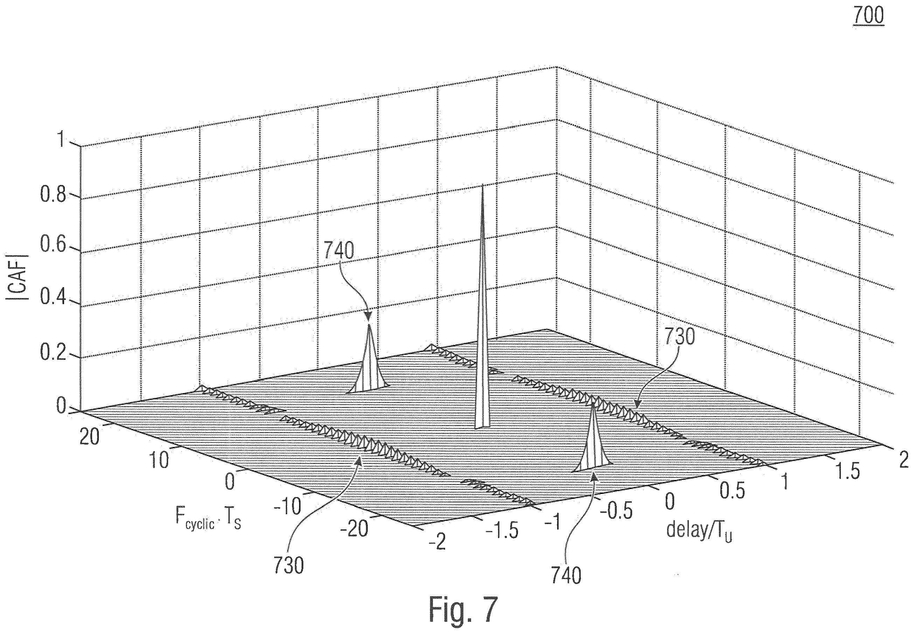

Fig. 7 shows a cyclic autocorrelation function 700 obtained from a received signal which is based on a GFDM transmission. The CAF 700 is similar to the CAFs 200, 300, 400, 500 and 600 as the same transmission scheme is underlying all of them. The peaks 730 are similar to peaks 630 and 530, as the same CP ratio is underlying the transmission scheme. Moreover, the peaks 740 are higher, e.g. higher than peaks 640, due to a higher roll-off factor used in the transmission scheme.

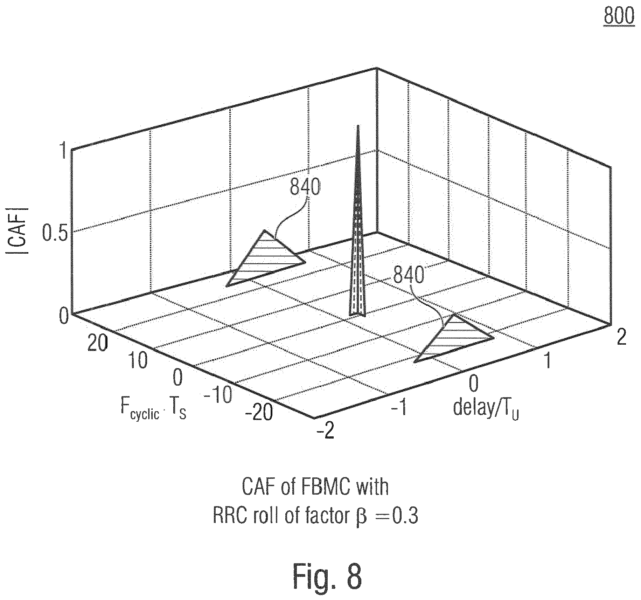

Fig. 8 shows a cyclic autocorrelation function 800 obtained from a received signal which is based on a FBMC transmission. The CAF 800 comprises peaks 840 similar to peaks 240, 340, 440, 540, 640 or 740, due to the pulse shaping filter in the transmitter, e.g. the filters used for the filter bank. Moreover, no peaks like the peaks 230, 330, 430, 530, 630 or 730 are present as no cyclic prefix is commonly used in FMBC. Therefore, the apparatus 100 may be able to detect an FBMC transmission based on the presence of peaks 840 and a lack of peaks according to peaks 230, 330, 430, 530, 630 or 730.

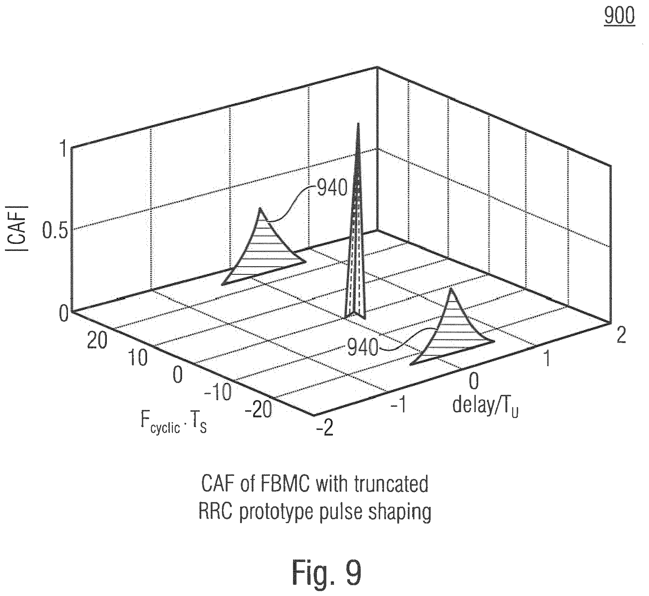

Fig. 9 shows a cyclic autocorrelation function 900 obtained from a received signal which is based on a FBMC transmission. The CAF 900 comprises peaks 940 similar to peaks 840, due to the pulse shaping filter in the transmitter. Moreover, the peaks 940 are different in shape than the peaks 840 due to differently shaped filters in the transmitter compared to the signal underlying CAF 800. For the received signal underlying CAF 800 a root-raised cosine (RRC) pulse shape filter was used, wherein for the signal underlying CAF 900 a truncated RRC pulse shape filter was used. Thereby, the apparatus 100 may use the shape of the peaks 240, 340, 440, 540, 640, 740, 840 or 940 to determine a shape or a type a pulse shaping filter used at the transmitter.

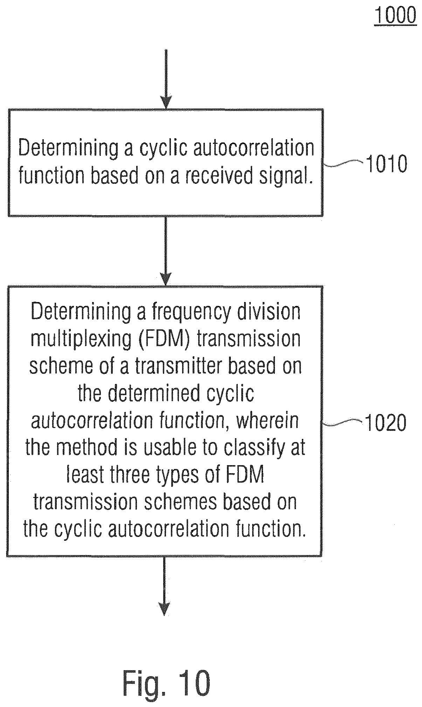

Fig. 10 shows a flow chart of a method 1000 according to embodiments of the invention. The Method 1000 can be used for classifying a communication signal. The method 1000 comprises determining 1010 a cyclic autocorrelation function based on a received signal and determining 1020 a frequency division multiplexing (FDM) transmission scheme of a transmitter based on the determined cyclic autocorrelation function. Moreover, the method is usable to classify at least three types of FDM transmission schemes based on the cyclic autocorrelation function.

The method 1000 can be supplemented by any of the features and functionalities described herein, also with respect to the apparatus.

Further aspects and conclusion

Embodiments of the invention can be supplemented by features and functionalities discussed in the following, either in combination or individually.

A signal is cyclostationary of order n if, and only if, there exists an n-th-order nonlinear transformation of the signal, that generates finite strength additive sine wave components, which result in spectral lines. As Gardner explains in [Gar91] and [Gar88], for n=2, a quadratic transformation will generate spectral lines. Notwithstanding, for stationary signals, only a spectral line at frequency zero can be generated. Another way to define that a signal is cyclostationary of order n, is that, if and only if, the time fluctuations in n spectral bands with centre frequencies that sum to certain nonzero values, are statistically dependent, in the sense, that their joint nth-order moment is nonzero. In stationary signals, only those bands whose centre frequencies sum to zero can exhibit statistical dependence. For a cyclostationary signal, each sum of centre frequencies for which, the n-th order spectral moment is nonzero, is identical to the frequency of a sine wave that can be generated by putting the signal through an appropriate n-th order nonlinear transformation. If a simple nontrivial case is considered, that is n=2, then it means that signal the x(t) is cyclostationary with cycle frequency $\beta$ if, and only if, at least some of its delay product waveforms exhibit a spectral line at frequency $\beta$, and if, and only if, the time fluctuations in at least some pairs of spectral bands of x(t) are correlated.

The autocorrelation function can be represented by a Fourier series expansion, which is expressed as

$$R_{ss}(t,\tau) = \sum_{\beta \in \psi} R_{ss}^{\beta}(\tau)\exp(j2\pi\beta t),$$

where $\beta$ is a cyclic frequency, and $R^{\beta}SS(\tau)$ is the Fourier coefficient, also called Cyclic Autocorrelation Function (CAF).

OFDM and GFDM are not the only waveforms that show peculiar cyclostationary properties. All waveforms proposed for 5G Radio access have unique spectral and time domain correlation properties that show up in their respective cyclostationary autocorrelation function.

In case of Filter Bank Multicarrier (FBMC), the synthesis filter may be a unique prototype filter designed for specific FBMC transmissions. The waveform may be a 7 or 8 point coefficient truncated Root Raised Cosine Filter. When CAF of FBMC is calculated, then the side peaks in the CAF are due to the specific pulse shaping filter of FBMC and this is reflected in the unique shape of the side peaks (240, 340, 440, 540, 640, 740, 840, 940). OQAM FBMC without any Cyclic Prefix will not have any normal peaks (230, 330, 430, 530, 630, 730) in the CAF that originate in OFDM-CAF because of lack of CP.

Other OFDM based waveforms proposed in 5G standardization activities may all have the normal CP peaks in their CAF. But the normal peaks will depend on the ratio of CP to useful data symbol. The side peaks of these OFDM based waveforms are dependent on the pulse shaping filters used. Different OFDM based waveforms include UF-OFDM (universally filtered OFDM), P-OFDM (Pulse Shaped OFDM), f-OFDM (Filtered-OFDM), Windowed-OFDM (W-OFDM) and precoded generalized OFDM. All these waveforms can be uniquely distinguished based on the pulse shaping filter used during the transmission. Even among a family of waveforms, each of them can be identified if the parameters of the pulse shaping filter changes (for example, if the roll of factor changes, the CAF side peaks change, If the number of time symbols required to pulse shape changes, then also the CAF changes). Hence we see that every single waveform can be uniquely identified based on the CAF of the waveforms.

In the following it is described how detection may be performed.

Using a Generalized Likelihood Ratio Test (GLRT) algorithm for cyclostationary detection one may compute a covariance matrix [Dan94]. Based on this covariance matrix, the method further computes a test statistic, $\tau$ (Tau). The exact expression for Tau is given in [Pan12].

The Test Statistic, Tau, may then be compared with a threshold $\gamma$, which is computed as

$$P_{FA,target} = 1 - \Gamma(1, \gamma/2),$$

Where, $\Gamma$, is the incomplete gamma function.

So, depending on the target Probability of false alarm, one can set the threshold, e.g. in apparatus 100. Further, the Test Statistic, Tau is compared with the calculated Threshold and then decision may be made, e.g. by apparatus 100.

In a 5G New Radio Access network, there are going to be a lot of devices with a huge variety of waveforms being transmitted for different use case scenarios. At the receivers, the waveforms may need to be identified correctly for further signal processing. At present OFDM signals can be identified, but no idea or technique to identify and differentiate between non-orthogonal waveforms like FBMC or GFDM exists. New Radio Access Techniques will also include various OFDM-like waveforms too. A problem may arise: how to differentiate between various OFDM like waveforms which have similar autocorrelative properties based on the construction of the cyclic prefix. Another problem that may arise is how to identify and differentiate between various waveforms from the GFDM or FBMC family. Various GFDM or FBMC waveforms with various parameters are distinct and cannot be separately identified at present.

Non-Orthogonal waveforms are recent inventions and the problem of separately identifying them is also a new problem. Till date no technologies exist to solve this. The study of cyclostationary properties conducted on GFDM signals are the recent State of the Art, but no further works are present regarding how to use the cyclostationary properties in separately identifying the various waveforms.

Previous work a bit related to this area has been based on Orthogonal wavefoms. Cyclostationarity of OFDM waveforms has been studied for a long time, but no work has been done till date regarding non-orthogonal waveforms. For different OFDM like pulse-shaped waveforms, no identification technologies are available. Identification of waveforms based on Cyclostationary Autocorrelation Function for Non-Orthogonal waveforms and for OFDM based Pulse Shaped waveforms is completely novel.

Analysis of the Cyclostationary autocorrelation function shows that cyclic frequencies $F_{cyclic}$ are at multiples of $1/T_s$, and some of the peaks are at delays equal to $T_U$. However, unlike OFDM, non-orthogonal waveforms like GFDM exhibit extra sidepeaks as seen in Fig. 2 to Fig. 9. These peaks are located at k·Ts, with integer 'k'. The location of side peaks are given by $(T_U + T_{CP}) \cdot M/(T_U Ts)$.

Wherein Ts is a symbol time of an GFDM block comprising $T_U$, which denotes the useful component time (payload) of a symbol, and $T_{CP}$ the time of the cyclic prefix of the symbol. Further, k is an indicator of integer multiple. Values of k may be 1, 2, 3, .... M is a number of time-samples used in the time-frequency grid of the data block, e.g. the number of time samples per GFDM symbol and $F_{cyclic}$ is the Fourier frequency $\beta$, e.g. from the equation in page 9 of this document and claim 5.

Depending on a roll off factor of a pulse shaping filter, the side peaks change. The higher the roll off factor, the higher the magnitude of the side peaks in the CAF.

The correlative property seen in the CAF for GFDM and for any non-orthogonal waveform is due to the wrap around of the pulse shaped subcarriers within the data block. Any Non-orthogonal waveform will give extra side peaks in its CAF. The shape and magnitude of the side peaks will depend on the pulse shaping techniques or the 'non-orthogonality' of the waveform. By non-orthogonality we mean the self-generated sub-carrier interference in the GFDM/FBMC waveform schemes. The CAF, hence, gives a measure of the non-orthogonality of the waveforms. Various GFDM waveforms with varying parameters will give similar and exactly same performance in linear autocorrelation calculation. But all the GFDM waveforms will have different Cyclostationary Autocorrelation Function, as the pulse shaping and other parameters are different. Based on the number of time samples used to engender the GFDM data block, the position of the side peaks in the CAF will change. Hence, observing the position of the side peaks, the estimate of the number of time samples used can be provided. Depending on the shape and size of the side peaks, the pulse shaping filter used can be estimated. The roll-off factor of the filter, determines the interference into the neighbouring subcarriers. With higher roll off factor, the interference increases and so does the Cyclical autocorrelative coefficient.

This technique to separately identify any non-orthogonal waveform and between the same waveform family is novel and no other previous literature is available. This CAF measure is also very efficient even in low SNR scenarios, as the CAF of the waveforms do not change depending on the signal strength. It is inherent in the construction of the signal.

In the following some benefits or aspects underlying embodiments are discussed.

- Cyclostationary Autocorrelation Function of each non orthogonal waveform with different parameters is different.
- A broader classification or identification can be done between OFDM based waveforms and Non-orthogonal waveforms by the absence or presence of the side peaks in the CAF.
- A finer identification of different GFDM or similar non orthogonal waveforms from the same family can be accomplished by studying the side peaks and their position.
- This method works like a finger printing and identifying technique. Any waveform with a different parameter than any other will have a different CAF.
- This property can be used to identify separate waveforms from similar waveform families.

Conventional parameter extraction based on linear autocorrelation can estimate number of subcarriers and block size, but that is not as efficient as a CAF based method underlying embodiments.

Moreover, embodiments describe an estimation of pulse shaping filters based on autocorrelation properties of New Radio Waveforms.

An idea underlying embodiments is that cyclostationary properties of different non-orthogonal waveforms highlight additional autocorrelative properties based on non-orthogonality of subcarriers.

Further, each type of non-orthogonal waveform will have a different cyclostationary autocorrelation function. Each waveform of the same family (like diff GFDMC or diff FBMC) will show variations in its CAF. Depending on the shape and size of side peaks, the pulse shaping filter used can be estimated, e.g. by apparatus 100. The roll-off factor of the pulse shaping filter determines the interference into neighboring subcarriers. With higher roll-off factor, the interference increases and so does the cyclical autocorrelative coefficient.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitory.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References:

[Gar88] W.A. Gardner. Signal Interception: A Unifying Theoretical Framework for Feature Detection. Communications, IEEE Transactions on, 36(8):897-906, Aug 1988.

[Gar91] W.A. Gardner. Exploitation of Spectral Redundancy in Cyclostationary Signals. Signal Processing Magazine, IEEE, 8(2):14-36, April 1991.

[Dan94] A. Dandewate and G. B. Giannakis, 'Statistical Test for presence of cyclostationarity', in IEEE Trans. Signal Process 1994.

[Pan12] D. Panaitopol and et.al., 'Cyclostationary Detection of Cognitive Radio Systems using GFDM Modulations', IEEE WCNC 2012.

**Claims**

1. A communication signal classifier (100):

   wherein the communication signal classifier is configured to determine a cyclic autocorrelation function (200, 300, 400, 500, 600, 700, 800) based on a received signal,
   wherein the communication signal classifier is configured to determine a frequency division multiplexing (FDM) transmission scheme of a transmitter based on the determined cyclic autocorrelation function, and
   wherein the communication signal classifier is configured to classify at least three types of FDM transmission schemes based on the cyclic autocorrelation function.

2. A communication signal classifier according to claim 1, wherein the classifier is configured to determine if an orthogonal frequency division multiplex (OFDM) transmission scheme and/or a generalized frequency division multiplex (GFDM) transmission scheme and/or a filter bank multicarrier (FBMC) transmission scheme is underlying the received signal based on the determined cyclic autocorrelation function of the received signal.

3. A communication signal classifier, wherein the classifier is configured to obtain the cyclic autocorrelation function based on a time delay and frequency analysis of the received signal, such that the determined cyclic autocorrelation is a two-dimensional function of time delay ($d$) and frequency ($\beta$).

4. A communication signal classifier according to claim 1 or 3, wherein the classifier is configured to determine the cyclic autocorrelation function using an autocorrelation of the received signal, in order to obtain a time delay dependency of the correlation of the received signal, and
a transformation into a frequency domain, in order to obtain a frequency dependency of the correlation of the received signal for the individual time delays of the autocorrelation.

5.  A communication signal classifier according to one of the claims 1 to 4, wherein the classifier is configured to obtain the cyclic autocorrelation function according to

$$R_{ss}^{\beta}(d) = \frac{1}{N_s} \sum_{n=0}^{N_s-1} s^*(n)s(n+d)\exp(-j2\pi\beta n\Delta t),$$

wherein $s(n)$ is the received signal, $N_s$ is a number of samples used for the computation, d is a time delay for which the cyclic autocorrelation function is computed, $\beta$ is a frequency for which the cyclic autocorrelation function is evaluated and * denotes complex conjugation.

6.  A communication signal classifier according to one of the claims 1 to 5, wherein the classifier is configured to detect an orthogonal frequency division multiplex transmission scheme based on a detection of peaks (230; 330; 430; 530; 630; 730) along a time delay ($d$) axis of the cyclic autocorrelation function, at non-zero time delay ($d$) and zero frequency ($\beta$), and no detection of peaks (240; 340; 440; 540; 640; 740; 840; 940) along a frequency axis ($\beta$) of the cyclic autocorrelation function, at non-zero frequency ($\beta$) and zero time delay ($d$).

7.  A communication signal classifier according to one of the claims 1 to 6, wherein the classifier is configured to detect a generalized frequency division multiplex transmission scheme based on a detection of peaks (230; 330; 430; 530; 630; 730) along a time delay axis ($d$) of the cyclic autocorrelation function, at non-zero time delay and zero frequency, and a detection of peaks (240; 340; 440; 540; 640; 740; 840; 940) along a frequency axis ($\beta$) of the cyclic autocorrelation function, at non-zero frequency and zero time delay.

8.  A communication signal classifier according to one of the claims 1 to 7, wherein the classifier is configured to detect a filter bank multicarrier transmission scheme based on no detection of peaks (230; 330; 430; 530; 630; 730) along a time delay axis ($d$) of the cyclic autocorrelation function, at non-zero time delay ($d \neq 0$) and zero frequency, and the detection of peaks (240; 340; 440; 540; 640; 740; 840; 940) along a frequency axis ($\beta$) of the cyclic autocorrelation function, at non-zero frequency and zero time delay.

9.  A communication signal classifier according to one of the claims 1 to 8, wherein the classifier is configured to estimate a pulse shaping filter used for the transmission of the received signal, based on a shape of a peak (230; 330; 430; 530; 630; 730) of the cyclic autocorrelation function at non-zero frequency around time delay zero.

10. A communication signal classifier according to one of the claims 1 to 9, wherein the classifier is configured to determine a roll-off factor of a pulse shaping filter based on a level of a peak (240; 340; 440; 540; 640; 740; 840; 940) at non-zero frequency around time delay zero, wherein the classifier is configured to estimate a high roll-off factor, when the level of the peak is high, and
wherein the classifier is configured to estimate a low roll-off factor, when the level of the peak is low.

11. A communication signal classifier according to one of the claims 1 to 10, wherein the classifier is configured to obtain a number of time samples used in a generalized frequency division multiplex transmission scheme to form a symbol, based on a location of a peak of the cyclic autocorrelation function along the frequency axis ($\beta$) of the cyclic autocorrelation function, at non-zero frequency and zero time delay.

12. A communication signal classifier according to one of the claims 1 to 11, wherein the classifier is configured to estimate a payload to cyclic prefix ratio of a transmit symbol, based on a level of a peak (230; 330; 430; 530; 630; 730) along a time delay axis of the cyclic autocorrelation function.

13. A communication signal classifier according to one of the claims 1 to 12, wherein the classifier is configured to classify the received signal based on the cyclic autocorrelation function using a generalized likelihood ratio test (GLRT).

14. Method (1000) for classifying a communication signal comprising:

determining (1010) a cyclic autocorrelation function based on a received signal,

determining (1020) a frequency division multiplexing (FDM) transmission scheme of a transmitter based on the determined cyclic autocorrelation function, and

wherein the method is usable to classify at least three types of FDM transmission schemes based on the cyclic autocorrelation function.

15. Computer program with a program code for performing the method 14, when the computer program runs on a computer or a microcontroller.

Fig. 1

EP 3 425 863 A1

Fig. 2

Peaks specific only for GFDM.
resulted from the use of RRC filters
and GFDM useful load

Fig. 3

Fig. 4

Fig. 5

Fig. 6

Fig. 7

CAF of FBMC with
RRC roll of factor β = 0.3

Fig. 8

EP 3 425 863 A1

900

940

940

CAF of FBMC with truncated
RRC prototype pulse shaping

|CAF|

$F_{cyclic} \cdot T_S$

delay/$T_U$

Fig. 9

<u>1000</u>

Determining a cyclic autocorrelation
function based on a received signal. ⟶1010

Determining a frequency division
multiplexing (FDM) transmission
scheme of a transmitter based on
the determined cyclic
autocorrelation function, wherein ⟶1020
the method is usable to classify at
least three types of FDM
transmission schemes based on
the cyclic autocorrelation function.

Fig. 10

Europäisches
Patentamt

European
Patent Office

Office européen
des brevets

## EUROPEAN SEARCH REPORT

Application Number

EP 17 17 9603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 655 872 A1 (NTT DOCOMO INC [JP]) 10 May 2006 (2006-05-10) * paragraph [0066] - paragraph [0079]; figures 9-13 * ----- | 1-15 | INV. H04L27/26 |
| X | EP 2 445 152 A2 (NTT DOCOMO INC [JP]) 25 April 2012 (2012-04-25) * paragraph [0025] - paragraph [0054]; figures 4-8 * ----- | 1-15 | |

TECHNICAL FIELDS
SEARCHED (IPC)

H04L

The present search report has been drawn up for all claims

| Place of search | Date of completion of the search | Examiner |
|---|---|---|
| Berlin | 6 December 2017 | González Gutiérrez |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 17 17 9603

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2017

| Patent document cited in search report | | Publication date | Patent family member(s) | | Publication date |
|---|---|---|---|---|---|
| EP 1655872 | A1 | 10-05-2006 | CN | 1829102 A | 06-09-2006 |
| | | | EP | 1655872 A1 | 10-05-2006 |
| | | | JP | 2006135674 A | 25-05-2006 |
| | | | US | 2006109931 A1 | 25-05-2006 |
| EP 2445152 | A2 | 25-04-2012 | CN | 102571228 A | 11-07-2012 |
| | | | EP | 2445152 A2 | 25-04-2012 |
| | | | JP | 5624847 B2 | 12-11-2014 |
| | | | JP | 2012090053 A | 10-05-2012 |
| | | | US | 2012094618 A1 | 19-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W.A. GARDNER.** Signal Interception: A Unifying Theoretical Framework for Feature Detection. *Communications, IEEE Transactions on,* August 1988, vol. 36 (8), 897-906
- Exploitation of Spectral Redundancy in Cyclostationary Signals. **W.A. GARDNER.** Signal Processing Magazine. IEEE, April 1991, vol. 8, 14-36

- **A. DANDEWATE ; G. B. GIANNAKIS.** Statistical Test for presence of cyclostationarity. *IEEE Trans. Signal Process,* 1994
- **D. PANAITOPOL.** Cyclostationary Detection of Cognitive Radio Systems using GFDM Modulations. *IEEE WCNC,* 2012